# EUROPEAN PATENT APPLICATION

(11) **EP 1 990 764 A1**
(43) Date of publication of application: **12.11.2008**
(21) Application number: 08251633.7
(22) Date of filing: 07.05.2008
(51) Int. Cl.: G06Q 40/00

(54) **Method of operating currency exchange**

(30) Priority: 09.05.2007 GB 0708934
(71) Applicant: Fexco, Killorglin, County Kerry (IE); Kilburn & Strode, London WC1R 4PJ (GB)
(72) Inventor: Tim Ring, Dublin 3 (IE); Mr. Colm Gleeson, Rathfarnham, Dublin 16 (IE)
(74) Representative: Rees, David Christopher

(57) **Abstract**

A method of operating a currency exchange bureau comprising a plurality of point-of-sale terminals 12 connected to a host server 11. The host server 11 updates currency exchange rates at the terminals 12 automatically at predetermined time intervals. Currency exchange transactions are conducted with customers at the points of sale at respective current exchange rates held by the respective terminals 12. Full individual transaction details for each terminal are batched together and sent from each terminal to the central processor; and the stocks of currency held at each point of sale are automatically updated by the central processor 11.

## Description

The present invention is concerned with the functions of a Bureau de Change, that is to say, a method of operating a currency exchange via a point-of-sale terminal. In such a facility, an operator will receive money in one currency, apply a foreign exchange rate, and return an amount in another currency, possibly after having deducted a commission.

A common current manual system uses a personal computer (PC) at the point of sale (POS) which holds foreign exchange (FX) rates that have to be entered manually, periodically. When a transaction is conducted, the operator at the POS enters the incoming currency and the amount, and then enters the required outgoing currency. The PC will then indicate the amount of outgoing currency to be paid. On completion of the transaction, the PC will print a transaction record and will retain the details of the transaction.

At the end of the day, or any other appropriate period, the PC will print out a batch of all the transaction details. The operator will use these details to complete a paper-based summary which includes abridged details of the transactions. The summariess are then sent to a central back office where the abridged details are entered manually for book keeping purposes.

This system has certain disadvantages. These largely stem from the fact that there is no direct communication between the POS and the central back office. As a result of this:
- New FX rates have to be entered manually at the PC
- Transaction records have to be entered manually at the central back office.
- Only summaries of the transactions are entered in the central back office and even these have to be entered manually
- No cash tracking can be performed conveniently
- It is time consuming to operate a manual, paper-based system for foreign exchange
- Storage is needed for paper-based records relating to the system at retail or office premises
- There can be no integration with other functions such as card verification and detection of cards issued in a foreign currency
- It is difficult to operate a centralised bureau de exchange system across a number of premises owned or operated by the same company.

It is therefore an object of the invention to alleviate these disadvantages.

According to the invention, there is provided a method of operating a currency exchange bureau comprising a plurality of POS terminals connected to a central processor, the method comprising: using the central processor to update currency exchange rates at the terminals automatically at predetermined time intervals; conducting currency exchange transactions with customers at the points of sale at respective current exchange rates held by the respective terminals; batching together full individual transaction details for each terminal and sending the batched details from each terminal to the central processor; and automatically updating the stocks of currency held at each point of sale.

In a preferred embodiment the system may also be able to process payment card transactions and provide dynamic currency conversion services.

In another embodiment, the invention could be used in conjunction with a money transfer service, for example the Western Union® Money Transfer Service. Where a customer wishes to send money to a receiver in another country via the service, and needs the receiver to be paid a fixed amount in the currency of that other country, the invention can be used to calculate the principal sum in the currency of the receiver's country and allow the sender to pay sufficient funds in the currency of the sender's country to ensure that the required sum is paid to the receiver. Otherwise, the money transfer would be converted to the foreign currency at the time of payout and, if foreign currency exchange rates fluctuate between the time of sending and the time of payout of the money transfer, it could not be guaranteed that the receiver would receive the required sum.

Preferably, the central processor is a PC-based server. Preferably, when rates are updated at a terminal, the rate information is also updated on a visual rate display, i.e. rate board.

Preferably, the terminals are connected to the central processor via the Public Service Telephone Network (PSTN) or the internet. The exchange rates held by the central processor may be updated by initiating a dial up to collect a rates file daily, through a configuration time set up. Preferably, therefore the exchange rates held by the central processor are updated via an online feed access and stored on the central processor and downloaded to the terminals in real time.

Preferably, the daily batched details are sent to the central processor at the end of a transactions period. A transactions period may be any convenient period of time such as four, six or eight hours. This may be preferred if the facility is available for transactions for 24 hours a day. The batched details may be sent to the central processor on a daily basis, possibly either at the start of the day or more preferably at the end of the day.

Preferably, orders for replacement stocks of currency are sent to the central processor from the terminals. Preferably, each stock order is allocated a unique reference number. Preferably, receipt of each stock order against its reference number is confirmed at the appropriate terminal and transmitted to the central processor. In this way effective cash tracking can be achieved and maintained. This may be achieved through bar coding at dispatch and scanning at terminal.

Preferably, stock order receipt confirmations are batched for transmission to the central processor. These may be transmitted on a daily basis.

Preferably, stock orders dispatched to a terminal are labelled with bar codes to enable stock tracking and those codes are scanned into the terminal when the stock is sold to a customer. Preferably, the terminal is configured to add a commission to the sum payable by the customer, and the commission to be added can be set by the user or the central processor individually for each terminal. Preferably the POS terminals have the capability to process card payment transactions. Optionally, cheques and or travellers cheques are accepted or provided by the merchant in lieu of cash.

The system can also be integrated with other financial electronic functions.

Thus, the system according to the invention can offer the following advantages:
- Elimination of FX rates input at POS
- Elimination of manual preparation of transaction summaries
- Elimination of manual input of transaction summaries at central back office
- The details of a transaction need only be entered onto the system once, via the terminal, and can then be processed automatically without further input of details by staff, which minimises the risk of operator error.
- Effective cash tracking
- Potential integration with other functions
- Back office system ends up with a complete detailed record of all transaction, till adjustments and any other logged events as recorded by each individual POS terminal to ease central administration of transactions at a number of premises
- As well as tracking cash we will be able to track cheques issued, cheques received and travellers cheques.

In a preferred embodiment, a group of individual POS terminals are connected via the PSTN (or the internet) to a server operated by a Bureau company. The terminals dial in (or connect via the internet) to the server to download rates automatically at specified times during the day (as many times as is desirable). When a transaction is carried out, the operator enters the same details into the POS terminal as would previously have been entered into the prior art system described above. The POS machine will indicate the amount of currency to be paid and will print out a transaction record. However, in the system according to the invention, at other specified times (or at the behest of the terminal operator), the terminal will again connect to the server to batch all completed transactions currently stored in the terminal. The terminal does not need to be connected to the server to carry out an individual transaction.

In its broadest sense, the invention might be considered to be the electronic connection between several POS terminals and a central back office, and coupled with this, the automatic electronic updating of the FX exchange rates by the central back office to the POS machines, the electronic transfer of full transaction details from the POS machines to the back office, and automatic stock updating. In addition to the increase in speed, and the increase in accuracy due to the elimination of manual information input, the system offers complete transaction records at the Bureau, an effective cash tracking option which are not practically feasible using the manual system, stock control, and also the potential for integration with other financial electronic functions.

The invention may be carried into practice in various ways and an embodiment will now be described by way of example with reference to the accompanying drawings, in which:

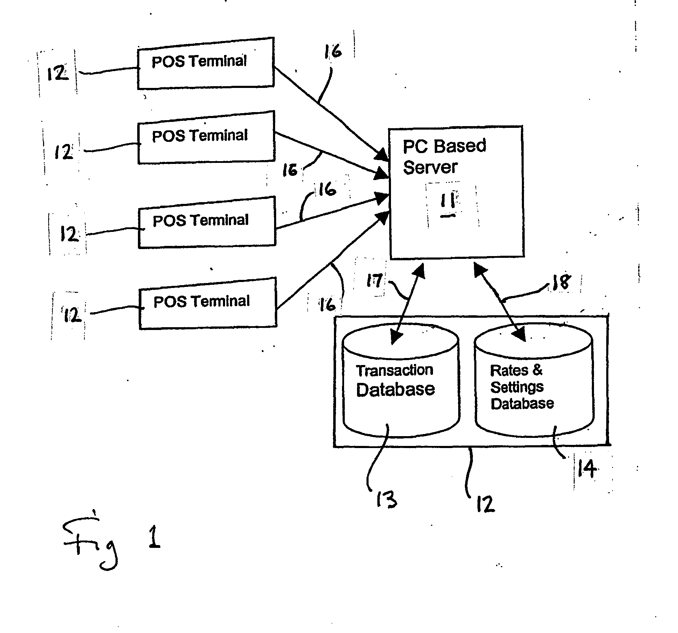

Figure 1 is a schematic representation of a system in accordance with the invention.

Figure 1 shows a currency exchange system according to the invention. The system comprises a PC based host server 11, several point of sale (POS) terminals 12, and a back office server 13 which includes a transaction database 14 and a rates and settings database 15. Each terminal 12 includes a processor, electronic memory, a display screen, an input keypad, a printer, a modem, a credit/debit card magnetic reader and Smart card support components.

Each terminal 12 is in permanent communication with the server 11 via its modem and a telephone link 16. In addition, the transaction database 14 and the rates and settings database 15 in the back office server 13 are similarly in communication with the host server 11 via telephone links 17 and 18 respectively.

In use, a transaction in which a customer purchases a base currency with a foreign currency amount is conducted at a terminal 12, as follows. The foreign currency amount is multiplied by the relevant rate, (already stored in the terminal), a commission figure added and the base currency value is calculated. The commission rates are set in the terminals at initial configuration. The base currency value is then exchanged for the foreign currency amount.

Full details of the transaction, comprising purchases, sales, stock in, stock out, base till adjustments, cheques issued and additionally, a unique transaction reference number for each transaction, are stored in the terminal 12. At the end of the day, the full transaction details are all sent as a batch to the server 11 and from there to the transaction database 13, where they are stored. This removes the need for operators to fill out complicated paper-based transaction summaries at the end of the day and minimises the risk of operator error.

The host server 11 also uses the transaction details to monitor currency stocks at the terminals 12. This means that currency can be re-ordered centrally by the server and the currency dispatched to the terminal locations as required with a minimum of delay.

The currency exchange rates stored at the terminals are updated each day. As new rates come into being, they are identified by the rates and settings database 15 in the back office server 13, and passed on to the host server 11. The host server 11 uses this information to generate new rates which are passed on periodically to the terminals 12.

Individual terminals are recognised and appropriate rates are dispatched to terminals with different rates being used in different sectors.

## Claims

1. A method of operating a currency exchange bureau comprising a plurality of point-of-sale (POS) terminals (12) connected to a central processor (11), **characterised in that** the method comprises: using the central processor (11) to update currency exchange rates at the terminals (12) automatically at predetermined time intervals; conducting currency exchange transactions with customers at the points of sale at respective current exchange rates held by the respective terminals (12); batching together full individual transaction details for each terminal (12) and sending the batched details from each terminal (12) to the central processor (11); and automatically updating and verifying the stocks of currency held at each point of sale.

2. A method as claimed in Claim 1, **characterised in that** the terminals (12) are connected to the central processor (11) via the PSTN (Public Switched Telephone Network) or the internet.

3. A method as claimed in Claim 1 or Claim 2, **characterised in that** the exchange rates held by the central processor (11) are updated via an online feed access and stored on the central processor (11) and downloaded to the terminals in real time.

4. A method as claimed in any preceding Claim, **characterised in that** the batched details are sent to the central processor (11) at the end of a transactions period.

5. A method as claimed in Claim 4, **characterised in that** the transaction period is one day.

6. A method as claimed in any of Claims 1 to 3, **characterised in that** the batched details are sent to the central processor (11) on a daily basis.

7. A method as claimed in any preceding Claim, **characterised in that** orders for replacement stocks of currency are sent to the central processor (11) from the terminals (12).

8. A method as claimed in Claim 7, **characterised in that** each stock order is allocated a unique reference number.

9. A method as claimed in Claim 8, **characterised in that** receipt of each stock order against its reference number is confirmed at the appropriate terminal (12) and transmitted to the central processor (11).

10. A method as claimed in Claim 9, **characterised in that** stock order receipt confirmations are batched for transmission to the central processor.

11. A method as claimed in Claim 10, **characterised in that** the stock order receipt batches are transmitted on a daily basis.

12. A method as claimed in Claim 9 or Claim 10 where stock orders dispatched to a terminal (12) are labelled with bar codes to enable stock tracking and those codes are scanned into the terminal (12) when the stock is sold to a customer.

13. A method as claimed in any preceding Claim, **characterised in that** the terminal (12) is configured to add a commission to the sum payable by the customer, and the commission to be added can be set by the user or the central processor (11) individually for each terminal (12).

14. A method as claimed in any preceding Claim, **characterised in that** the terminals (12) have the capability to process card payment transactions

15. A method as claimed in any preceding Claim, **characterised in that** cheques and or travellers cheques are accepted or provided by the merchant in lieu of cash.

16. A method as claimed in any preceding Claim, integrated with other financial electronic functions.
